# EUROPÄISCHE PATENTANMELDUNG

(11) **EP 1 940 104 A2**
(43) Veröffentlichungstag der Anmeldung: **02.07.2008**
(21) Anmeldenummer: 07025152.5
(22) Anmeldetag: 27.12.2007
(51) Int. Cl.: H04L 27/38

(54) **Vorrichtung und Verfahren zum Entscheiden eines Symbols beim Empfang eines mit einem Quadratursignalpaar gekoppelten Signals zur QAM-Frequenzregelung und/oder Rotationsregelung**

(30) Priorität: 29.12.2006 DE 102006062519
(71) Anmelder: Micronas GmbH, 79008 Freiburg (DE)
(72) Erfinder: Bock, Christian, 79108 Freiburg (DE)
(74) Vertreter: Göhring, Robert

(57) **Zusammenfassung**

Die Erfindung bezieht sich auf eine Vorrichtung bzw. ein Verfahren zum Entscheiden eines Symbols (D) beim Empfang eines mit einem Quadratursignalpaar (I, Q) gekoppelten Signals mit einem Entscheider (10) zum Entscheiden des Symbols (D) durch Analyse eines Empfangssignals (sa, sd) im komplexen Koordinatenraum (I, Q) und einer Regelungsschleife zur QAM-Frequenzregelung und/oder Rotationsregelung unter Verwendung von Regelungsparametern (ΔΦ, ρ'), die ausgebildet und/oder gesteuert ist abhängig von zumindest einem vom Entscheider (10) entschiedenen Symbol (D) die Regelungsparameter (ΔΦ, ρ') für spätere Entscheidungen anzupassen, wobei eine Wichtungswerteinrichtung (18) ausgebildet und/oder gesteuert ist, für die vom Entscheider (10) zu entscheidenden und/oder entschiedenen Symbole (D) jeweils einen Wichtungswert (G) einer Vielzahl von Wichtungswerten (G) abhängig von der Symbolposition im komplexen Koordinatenraum (I, Q) für die Regelungsschleife bereitzustellen.

## Beschreibung

Die Erfindung bezieht sich auf eine Vorrichtung zur QAM-Frequenzregelung mit den oberbegrifflichen Merkmalen gemäß Patentanspruch 1 und ein entsprechendes Verfahren zur QAM-Frequenzregelung.

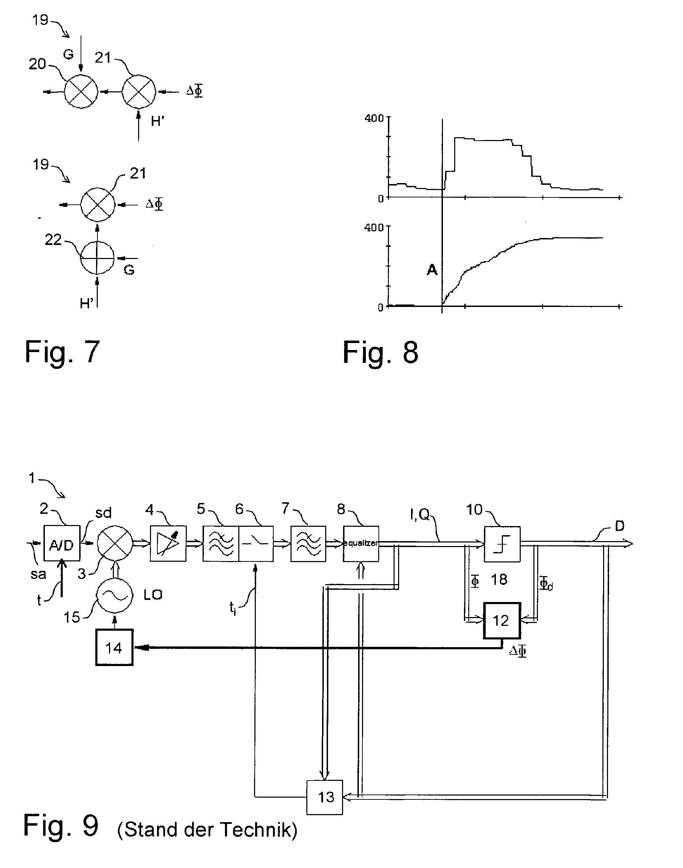

Wie dies aus Fig. 9 ersichtlich ist, besteht gemäß dem Stand der Technik ein Demodulator 1 zum Bestimmen und Entscheiden von Symbolen D aus einem digitalisierten Signal sd, welches an ein Quadratursignalpaar eines Modulationsverfahrens, z. B. gemäß einem QAM-Standard, gekoppelt ist, aus einer Vielzahl von Einzelkomponenten. Bei der dargestellten Ausführungsform empfängt der Demodulator 1 an einem Eingang von einer Signalquelle ein analoges Signal sa. Dieses analoge Signal sa wird einem AD-Umsetzer 2 zum Umsetzen in ein digitales Signal sd zugeführt. Außerdem weist der AD-Umsetzer 2 einen Eingang für ein Abtastsignal t auf. Das digitale Signal sd wird vom AD-Umsetzer 2 zu einem Quadraturumsetzer 3 geführt. Der Quadraturumsetzer 3 setzt das digitale Signal sd in das Basisband um und gibt das in die beiden Quadratursignalkomponenten des kartesischen Koordinatensystems aufgesplittete digitalisierte Signal sd aus. Zur Frequenzumsetzung wird der Quadraturumsetzer 3 mit zwei um 90° versetzten Trägern aus einem lokalen Oszillator 15 gespeist, dessen Frequenz und Phase durch eine Trägerregeleinrichtung 14 gesteuert wird. Die Quadratursignalkomponenten von dem Quadraturumsetzer 3 werden einer Verstärkungsregeleinrichtung 4 zugeführt. Ein Ausgangssignal der Verstärkungsregeleinrichtung 4 wird einem Filter 5 geführt. Die beiden Quadratursignalkomponenten I, Q werden dann einer Symbol-Abtasteinrichtung 6 zugeführt, welche eine Abtastregeleinrichtung aufweist. Die Steuerung der Symbol-Abtasteinrichtung 6 erfolgt über einen Eingang, dem ein Abtastsignal tᵢ zugeführt wird. Die Symbol-Abtasteinrichtung 6 führt eine zeitliche Interpolation zwischen den realen Abtastwerten auf der Symbolrate oder einem ganzzahligen Vielfachen davon aus. Alternativ dazu kann der AD-Umsetzer mit dem Abtastsignal gesteuert werden. In diesem Fall wäre das digitale Signal schon in der Symbolrate oder einem Vielfachen davon und die Abtasteinrichtung könnte entfallen. Das Ausgangssignal der Abtasteinrichtung 6 wird mittels eines insbesondere Nyquist-Filters 7 gefiltert und einem Entzerrer 8 zugeführt. Der Entzerrer 8 stellt ein vorläufiges Symbol an seinem Ausgang bereit. Nachfolgend werden mittels des Symbolentscheiders 10 entschiedene Symbole D gebildet. Diese Symbole D werden dann weiteren digitalen Signalverarbeitungseinrichtungen zugeführt. Der Entscheider 10 extrahiert somit die digitalen Daten.

Dieser Entscheider 10 ist in die entscheidungsrückgekoppelten Regelungen von Trägerfrequenz/-phase, Abtastzeitpunkt oder Entzerrer eingebunden. Die Taktsteuereinrichtung 13 erzeugt das Abtastsignal tᵢ, welches insbesondere der Symbol-Abtasteinrichtung 6 oder in der alternativen Ausführungsform dem AD-Umsetzer zugeführt wird. Außerdem wird der Taktsteuereinrichtung 13 das Signal des Entzerrers 8 zugeführt. Der Trägerregeleinrichtung 14 wird eine Phasendifferenz bzw. ein Phasenoffset ΔΦ angelegt, welche in einer Rotationssteuereinrichtung 12 bestimmt wird. Der Phasenoffset ΔΦ wird zwischen der Phase Φ der Symbole vor dem Entscheider 10 und der Phase Φ_{d} der Symbole D hinter dem Entscheider 10 bestimmt.

Derartige Vorrichtung und Verfahren zur QAM-Frequenzregelung mit Entscheidern sind z.B. aus DE 36 19 744 oder DE 103 44 756 bekannt.

Für die Übertragung von digitalen Signalen mit QAM werden typischerweise Empfängerkonzepte mit komplexer Abwärtsmischung ins Basisband sowie mit Amplituden-, Trägerfrequenz-/Trägerphasen- und Abtastratenregelung eingesetzt. Das Einfangen der Trägerfrequenz und -phase durch eine PLL (phasengekoppelte Schleife) ist insbesondere bei höherwertigen Modulationen schwierig, da die Entscheidungen während einer Akquisitionsphase meistens falsch sein werden. Der Phasenoffset ΔΦ ist die Winkeldifferenz zwischen dem abgetasteten und digitalisieren empfangenen Signal und dem entschiedenen Symbol des Alphabets. Ein Frequenzoffset bewirkt eine konstante Veränderung richtig bestimmter Phasenoffsets und kann als Differenz aufeinanderfolgender Phasenoffsets gemessen werden.

Ein üblicher QAM-Empfänger mischt mittels z.B. einer Schaltung gemäß Fig. 9 das auf einer Trägerfrequenz befindliche Signal in das Basisband und tastet es zu den Symbolzeitpunkten ab, worauf nach einer Pegelanpassung, einer Nyquistfilterung und einer adaptiven Filterung in einem Equalizer eine Entscheidung stattfindet. Es ist dabei gleichgültig, in welcher Reihenfolge die Funktionsblöcke Mischung in das Basisband, Abtastung mit der Symbolrate und Verstärkungsregelung erfolgen. Die Mischung in das Basisband kann im analogen Bereich vor der dann komplexen, d. h. zweikanaligen A/D-Wandlung oder nach der A/D-Wandlung der Zwischenfrequenz erfolgen, die Abtastung zu Symbolzeitpunkten kann, wie als Alternative beschrieben, schon durch den A/D-Wandler oder, wenn dieser asynchron auf einer beliebigen Frequenz arbeitet, durch eine digitale Abtastratenwandlung erfolgen und Blöcke zur Verstärkungsregelung können prinzipiell an beliebiger Stelle eingefügt werden.

Bei einem einfachen QAM-Empfänger muss die Regelung des lokalen Oszillators auch die Trägerphase mit ausregeln.

Bei einem besseren QAM-Empfänger wird die Trägerphase durch eine extra Rotation mit einem Rotationssteuersignal, das ein geschätzter Winkel ist, in Form einer komplexen Multiplikation unmittelbar vor dem Entscheider ausgeregelt, bevor die Symbolentscheidung stattfindet. Für die Regelkreise, die im Koordinatensystem des empfangenen Signals verbleiben, wie der Entzerrer 8 oder die Taktsteuereinrichtung 13, muss das entschiedene Symbol D um den Winkel des Rotationssteuersignals zurückrotiert werden. Entspricht der geschätzte Winkel nicht dem tatsächlichen Drehwinkel des Koordinatensystems des empfangenen Signals, resultiert ein Phasenoffset ΔΦ zwischen dem Phasenwinkel des empfangenen Signals und dem Winkel des entschiedenen Symbols. Der geschätzte Drehwinkel für die kommende Symbolentscheidung kommt aus einen Phasenoffsetfilter. Im einfachsten Fall ist es ein Summator, der den Phasenoffset ΔΦ zum aktuellen Drehwinkel addiert.

Ein sich wiederholender gleicher Phasenoffset ΔΦ weist auf einen Frequenzoffset des lokalen Oszillators hin und kann daher zu dessen Regelung verwendet werden. Üblicherweise wird der Phasenoffset ΔΦ in einem Frequenzkontrollblock tiefpassgefiltert.

Eine solche Frequenzregelung funktioniert im eingeschwungenen Zustand. In der Akquisitionsphase sind jedoch die meisten Symbolentscheidungen falsch, so dass der Phasenoffset ΔΦ nicht immer einen Frequenzoffset abbildet.

Da die frühen Entscheidungen sowieso meistens falsch sein werden, ist eine Ausführungsform gemäß US 5,471,508 auf die Bestimmung eines Quadrantenschwerpunktes beschränkt und wendet dafür einen "reduced constellation set" an, bei dem jeder Quadrant durch nur ein Symbol auf der Winkelhalbierenden repräsentiert wird. Weiterhin kann für den Radius als eine Schwelle ein "threshold value" eingestellt werden, unterhalb dessen die empfangenen Signale unberücksichtigt bleiben. Dadurch werden Zipfel der Quadranten überbewertet. Durch Statistik führt dieses Verfahren zu einem Einfangen auch hoher Frequenzoffsets.

US 5,799,037 verwendet ein ähnliches Verfahren, bei dem jedoch in einem Zwischenschritt vor einem endgültigen Einrasten der Regelungen acht anstatt vier möglicher Hilfssymbole eingeführt werden.

Bei der einfachen, entscheidungsrückgekoppelten Frequenzregelung hängt der Fangbereich von richtigen Entscheidungen ab und ist daher sehr klein. Die Regelungen nach US 5,471,508 und US 5,799,037 können zwar den theoretischen Fangbereich von ±12,5 % des Symboltaktes, oberhalb dessen ein Frequenzalias aufeinanderfolgende Symbole um n·π/2 verdrehen will, ausnutzen, erfordern jedoch Umschaltungen, bevor eine entscheidungsrückgekoppelte PLL die kleineren Frequenzfehler und den Phasenfehler ausregeln kann.

Die Aufgabe der Erfindung besteht darin, eine Vorrichtung mit den oberbegrifflichen Merkmalen gemäß Patentanspruch 1 und ein entsprechendes Verfahren bereit zu stellen, welche mit einfachen Mitteln eine alternative QAM-Frequenzregelung und/oder Rotationsregelung ermöglichen.

Diese Aufgabe wird durch die eine Vorrichtung mit den Merkmalen des Patentanspruchs 1 bzw. das Verfahren mit den Merkmalen des Patentanspruchs 11 gelöst. Vorteilhafte Ausgestaltungen sind Gegenstand von abhängigen Ansprüchen.

Bevorzugt wird demgemäss insbesondere eine Vorrichtung zum Entscheiden eines Symbols beim Empfang eines mit einem Quadratursignalpaar gekoppelten Signals mit einem Entscheider zum Entscheiden des Symbols durch Analyse eines Empfangssignals im komplexen Koordinatenraum und mit einer Regelungsschleife zur QAM-Frequenzregelung und/oder Rotationsregelung unter Verwendung von Regelungsparametern, die ausgebildet und/oder gesteuert ist abhängig von zumindest einem vom Entscheider entschiedenen Symbol die Regelungsparameter für spätere Entscheidungen anzupassen, wobei eine Wichtungswerteinrichtung ausgebildet und/oder gesteuert ist, für die vom Entscheider zu entscheidenden und/oder entschiedenen Symbole jeweils einen Wichtungswert einer Vielzahl von Wichtungswerten abhängig von der Symbolposition im komplexen Koordinatenraum für die Regelungsschleife bereitzustellen. Mit anderen Worten hängt die Wichtung mit Wichtungswerten von den konkreten Positionen entschiedener oder zu entscheidender Symbole ab.

Die Wichtungswerteinrichtung ist bevorzugt ausgebildet und/oder gesteuert, aus einem Phasenoffset und/oder Rotationssteuersignal den Wichtungswert bereitzustellen.

Eine Wichtungseinrichtung ist bevorzugt ausgebildet und/oder gesteuert, mit dem Wichtungswert einen Regelwert für eine Trägerregeleinrichtung, insbesondere den Phasenoffset, mit dem Wichtungswert zu wichten. Die Wichtungswerte können somit in Art von Qualitätszahlen dazu verwendet werden, den Phasenoffset in einem Frequenzoffsetqualitätsblock so zu gewichten, dass die Frequenzregelung des lokalen Oszillators auch bereits während der Akquisitionsphase der Schaltungsanordnung, in welcher es noch viele falsche Entscheidungen gibt, funktioniert.

Eine alternative Wichtungseinrichtung ist bevorzugt als Bestandteil einer Rotationssteuereinrichtung ausgebildet und/oder gesteuert, mit dem Wichtungswert einen Phasenoffset zu wichten. Der Wichtungswert wird somit dazu verwendet, die Berechnung eines geschätzten Rotationssignals als einem Drehwinkel für eine kommende Symbolentscheidung zu verbessern.

Die Wichtungseinrichtung kann optional zusätzlich zum Erzeugen des Rotationssignals als eine zweite Wichtungseinrichtung einen zusätzliches Wichtungswert bereitstellen, mit dem als verzögerter weiterer Wichtungswert der Regelwert, insbesondere ein Phasenoffset, für die Trägerregeleinrichtung zusätzlich gewichtet wird. Mit einem Verzögerungsglied kann ein verzögerter weiterer Wichtungswert zusätzlich zu dem Wichtungswert bereit gestellt werden. Die weitere Wichtungswerteinrichtung kann insbesondere als Bestandteil eines Phasenoffsetfilters ausgebildet sein.

Die Wichtungswerteinrichtung ist bevorzugt ausgebildet und/oder gesteuert, jedem Symbol jeweils den Wichtungswert der Vielzahl von Wichtungswerten abhängig von seinem Radius des Symbols im komplexen Koordinatenraum zuzuordnen.

Die Wichtungswerteinrichtung ist bevorzugt ausgebildet und/oder gesteuert, jedem Symbol jeweils den Wichtungswert der Vielzahl von Wichtungswerten abhängig von der Position des Symbols im komplexen Koordinatenraum individuell zuzuordnen.

Mittels einer in einem Speicherabschnitt hinterlegten Tabelle, insbesondere variablen Tabelle können solche Wichtungswerte auf einfache Art und Weise bereitgestellt werden. Die Wichtungswerte sind insbesondere aus der Tabelle als einer zwei-oder mehrdimensionalen Tabelle bereitstellbar.

Bevorzugt wird außerdem insbesondere ein Verfahren zum Entscheiden eines Symbols beim Empfang eines mit einem Quadratursignalpaar gekoppelten Signals zur QAM-Frequenzregelung und/oder Rotationsregelung bei dem mit einem Entscheider eine Entscheidung eines Symbols unter Verwendung von Regelungsparametern im komplexen Koordinatenraum getroffen wird und abhängig von zumindest einem entschiedenen Symbol die Regelungsparameter für spätere Entscheidungen angepasst werden, wobei für die vom Entscheider zu entscheidenden und/oder entschiedenen Symbole jeweils ein Wichtungswert einer Vielzahl von Wichtungswerten abhängig von der Symbolpositon im komplexen Koordinatenraum für die Regelungsschleife bereitgestellt wird. Mit dem zumindest einen Wichtungswert wird bevorzugt ein Phasenoffset und/oder ein Rotationssteuersignal gewichtet. Die Vielzahl der Wichtungswerte kann in einer Tabelle bereitgestellt werden, die für jedes der verschiedenen Symbolalphabete verschiedene Vielzahlen der Wichtungswerte bereitstellt. Die Wichtungswerte können in einer Tabelle bereitgestellt werden, wobei die Wichtungswerte einem Synchronisationsfortschritt der Frequenzregelung angepasst werden können. Ein Phasenoffset und/oder eine Rotationswert können auch mit zwei oder mehr Wichtungswerten gewichtet werden.

Einsetzbar ist ein solches Verfahren bzw. eine solche Schaltung insbesondere für komplexe digitale Modulationsverfahren wie QAM. Sie werden von den meisten neuen Rundfunk-, Fernseh-und Datendiensten über Kabel und z. T. auch terrestrisch benutzt.

Ein Ausführungsbeispiel der Erfindung und verschiedene Ausführungsformen dazu werden nachstehend anhand der Zeichnung näher erläutert. Es zeigen:
- Fig. 1: die Symbole des ersten Quadranten von 64-QAM mit einem Beispiel von den Symbolen zugeordneten radiusabhängigen Wichtungen;
- Fig. 2: die Symbole des ersten Quadranten von 64-QAM mit einem Beispiel von Wichtungen, welche allen Symbolen individuell zugeordnet sind;
- Fig. 3: eine grundlegende Schaltungsanordnung für einen Dekoder zum Entscheiden eines Symbols gemäß einer ersten Ausführungsform;
- Fig. 4: eine grundlegende Schaltungsanordnung für einen Dekoder zum Entscheiden eines Symbols gemäß einer zweiten Ausführungsform;
- Fig. 5: eine grundlegende Schaltungsanordnung für einen Dekoder zum Entscheiden eines Symbols gemäß einer dritten Ausführungsform;
- Fig. 6: eine grundlegende Schaltungsanordnung für einen Dekoder zum Entscheiden eines Symbols gemäß einer vierten Ausführungsform;
- Fig. 7: zwei Schaltbilder für Verknüpfungen eines Steuersignalwerts mit einem Wichtungswert;
- Fig. 8: einen gemessenen und akkumulierten absoluten Phasenfehler bzw. einen Akkumulator der Frequenzregelung; und
- Fig. 9: eine grundlegende Schaltungsanordnung für einen Dekoder zum Entscheiden eines Symbols gemäß dem Stand der Technik;

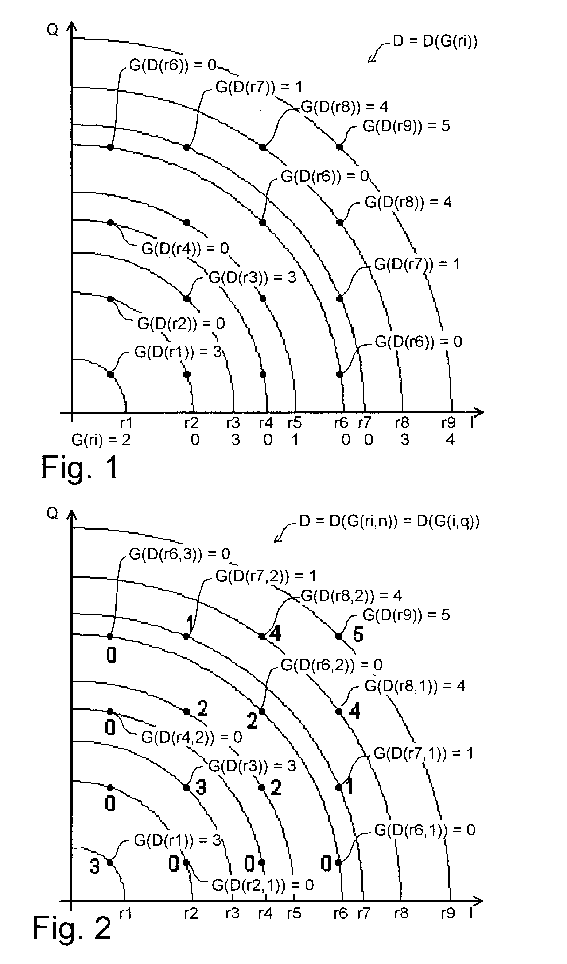

Wie dies aus Fig. 1 und 2 ersichtlich ist, sind Symbole D eines Symbolalphabets im komplexen Phasenraum I, Q in für sich bekannter Art und Weise auf Radien r1 - r9 angeordnet, wobei ein erster Quadrant mit beiden Achsen im positiven Bereich für 64-QAM betrachtet wird. Dargestellt sind somit die Symbole D und die möglichen Symbolradien r1 - r9 im ersten Quadrant.

Im Rahmen einer Regelschleife zur QAM-Frequenzregelung (QAM: Quadratur-Amplituden-Modulation) werden die Symbole D in einem Entscheider entschieden. Symbolwerte vor und nach dem Entscheider werden der Regelschleife als Basisgrößen zur Bestimmung von Regelungsparametern zugeführt.

Einheitlich bei allen nachfolgend beschriebenen Ausführungsformen werden diese Regelungsparameter oder zu deren Bestimmung verwendete Zwischenwerte mit Wichtungswerten G gewichtet. Dies gilt nicht für alle Regelungsparameter, zum Teil nur für die Phase φ oder den Winkel ρ. Jeder Radius r1 - r9 und/oder jedes Symbol D erhält eine Qualitätszahl bzw. einen eigenen Wichtungswert G zugeordnet.

Wie dies aus Fig. 1 ersichtlich ist, werden bei einer einfachen Ausführungsform den jeweiligen Radien r1 - r9 jeweils individuelle Wichtungswerte G zugeordnet. Die Wichtungswerte G sind somit von den Radien ri mit i = 1 - 9 abhängige Wichtungswerte G(ri). Entsprechend sind die Wichtungswerte G, welche den einzelnen Symbolen D zugeordnet sind, sind somit von den Symbolen und den Radien ri mit i = 1 - 9 abhängige Wichtungswerte G(D(ri)).

Vorzugsweise werden dabei Radien r2, r4, r6, welche dicht bei anderen der Radien r3, r5, r7 liegen, niedrige Wichtungswerte oder der Wert "0" zugewiesen, da Symbole auf solchen niedrig gewichteten Radien r2, r4, r6 zu besonders fehlerhaften Entscheidungen führen können. Umgekehrt werden Radien r1, r3, r8, r9, welche entfernt von anderen der Radien r2, r4, r6 liegen oder sonst zu besonders sicheren Entscheidungen führen können, hohe Wichtungswerte "2", "3", "4" zugewiesen.

Vom allgemeinen Grundgedanken her wird dabei jedem Symbol D des Alphabets eine Qualitätszahl bzw. ein Wichtungswert G zugeordnet, der ein Maß für die wahrscheinliche Richtigkeit der Entscheidung ist. Diese Qualitätszahl orientiert sich am Ziel ihrer Verwendung, hier also z.B. die wahrscheinliche Richtigkeit eines gemessenen Phasenoffsets.

Für eine Frequenzregelung werden Symbole D in den Ecken der Konstellation sowie auf Radien, deren Nachbarradien weit entfernt sind, speziell auf solchen Radien, die nur ein Symbol auf der Winkelhalbierenden des Quadrates oder zumindest keine Symbole in der Nähe der I- und Q-Achse haben, bevorzugt. Dadurch wird, insbesondere bei einer Entscheidung zunächst für Radien, wie sie für sich genommen aus z.B. DE 36 19 744 bekannt ist, oder bei einer Entscheidung, wie sie für sich genommen aus DE 103 44 756 bekannt ist, eine bedeutend bessere Frequenzregelung möglich.

Solche Radien ri oder Symbole D mit hohen Zahlen sind immuner gegenüber Offsets der Trägerphase und daher eher aussagefähig, wenn noch ein großer Frequenz- oder Phasenoffset des Trägers zu erwarten sind. Dies ist insbesondere der Fall, wenn nicht die herkömmliche Rechteckentscheidung verwendet wird, sondern eine solche nach z.B. DE 103 44 756, bei der die Radien gegenüber den Winkeln stark bevorzugt werden können.

Die Qualitätszahlen erhält man durch eine statistische Analyse von möglichen Fehlern durch Offsets in der Trägerphase und in der Abtastphase. Die Qualitätszahlen können auch variabel sein und dem Fortschritt der Signalakquisition angepasst werden.

Wie dies aus Fig. 2 ersichtlich ist, können die Wichtungswerte G unabhängig von der Zuordnung zu festen Radien ri auch individuell für die einzelnen Symbole D festgelegt werden. Besonders bevorzugt wird eine Zuordnung nach Radien ri und Positionen n innerhalb der Radien ri, so dass die Wichtungswerte G(D(ri,n)) von den einzelnen Symbolen D und den Radien ri abhängig zugewiesen sind.

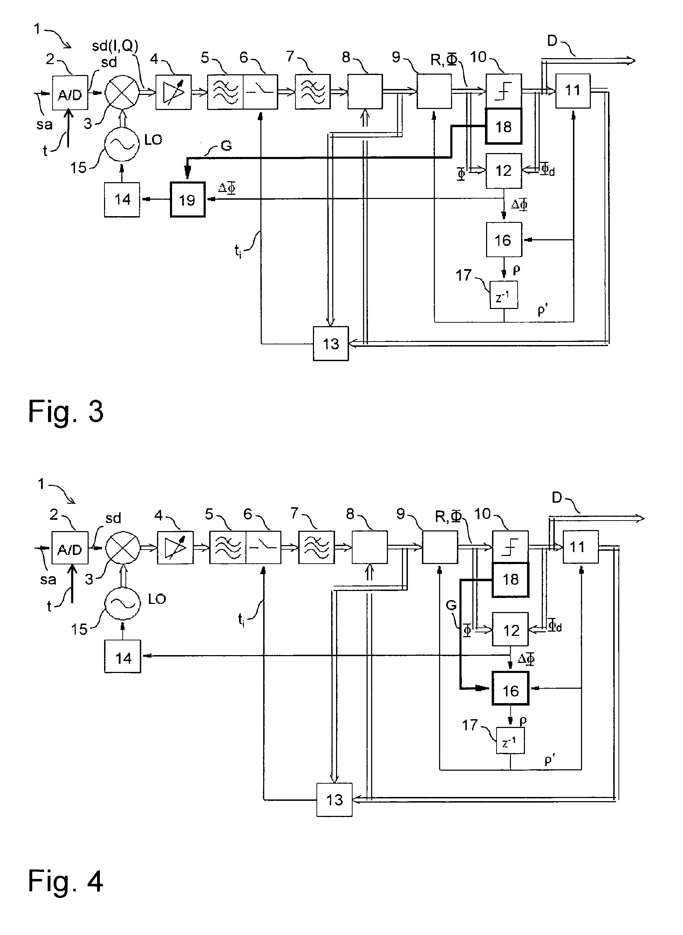

Wie dies aus Fig. 3 ersichtlich ist, besteht ein Demodulator 1 als beispielhafte Schaltungsanordnung zum Bestimmen und Entscheiden von Symbolen D aus einem digitalisierten Signal sd, welches an ein Quadratursignalpaar eines Modulationsverfahrens, z. B. gemäß einem QAM-Standard, gekoppelt ist, aus einer Vielzahl von Einzelkomponenten. Diese können alle oder einzeln auch Bestandteil einer integrierten Schaltung sein. Insbesondere sind nachfolgend beschriebene Komponenten je nach Anwendungszweck weglassbar, untereinander in der Reihenfolge vertauschbar oder um weitere Komponenten ergänzbar. Auch ist die Weiterführung von Signalen als reelle Signale, komplexe Signale oder einzelne komplexe Signalkomponenten je nach Anwendungszweck und spezieller Schaltungsanordnung entsprechend umsetzbar.

Bei der dargestellten Ausführungsform empfängt der Demodulator 1 an einem Eingang von einer Signalquelle, beispielsweise einem Tuner, ein analoges Signal sa. Dieses analoge Signal sa, welches üblicherweise in einer bandbegrenzten Zwischenfrequenzlage vorliegt, wird einem AD-Umsetzer 2 (AD: Analog/Digital) zum Umsetzen in ein digitales Signal sd zugeführt. Außerdem weist der AD-Umsetzer 2 einen Eingang für ein Taktsignal bzw. Abtastsignal t auf. Das digitale Signal sd wird vom AD-Umsetzer 2 zu einem Mischer bzw. Quadraturumsetzer 3 geführt.

Der Quadraturumsetzer 3 setzt das digitale bzw. digitalisierte Signal sd in das Basisband um. Das Basisband entspricht den Anforderungen des Demodulators 1 und des verwendeten Modulationsverfahrens. Entsprechend gibt der Quadraturumsetzer das in die beiden Quadratursignalkomponenten I, Q des kartesischen Koordinatensystems aufgesplittete digitalisierte Signal sd aus. Zur Frequenzumsetzung wird der Quadraturumsetzer 3 üblicherweise mit zwei um 90° versetzten Trägern aus einem lokalen Oszillator 15 gespeist, dessen Frequenz und Phase durch eine Trägerregeleinrichtung 14 gesteuert wird. Die Trägerregeleinrichtung 14 ist insbesondere als eine Frequenzregeleinrichtung ausgebildet.

Die Quadratursignalkomponenten I, Q, die von dem Quadraturumsetzer 3 ausgegeben werden, werden einer Verstärkungsregeleinrichtung 4 zugeführt. Die Steuerung der Verstärkungsregeleinrichtung 4 dient dazu, den Aussteuerbereich eines Symbolentscheiders 10 optimal auszunutzen. Ein Ausgangssignal der Verstärkungsregeleinrichtung 4 wird z.B. zu einem Bandpass-Filter oder einem Tiefpass-Filter 5 geführt, welcher das digitale Signal von Gleichanteilen bzw. von störenden Oberwellen befreit. Die Quadratursignalkomponenten I, Q werden so vor oder nach der Verstärkung durch die Verstärkungsregeleinrichtung 4 einem Tiefpass-Filter 5 zugeführt, welcher zur Beseitigung störender Oberwellen dient.

Das derart verstärkte und gefilterte Quadratursignalpaar I, Q bzw. die beiden Quadratursignalkomponenten I, Q werden dann einer Symbol-Abtasteinrichtung 6 zugeführt, welche eine Abtastregeleinrichtung aufweist. Die Steuerung der Symbol-Abtasteinrichtung 6 erfolgt über einen Eingang, dem ein Abtastsignal tᵢ zugeführt wird. Die Symbol-Abtastzeitpunkte des Abtastsignals tᵢ orientieren sich im normalen Betriebszustand an der Symbolrate 1/T und üblicherweise auch an der genauen Phasenlage des empfangenen digitalen Signals sd. Die Symbolabtasteinrichtung 6 führt eine zeitliche Interpolation zwischen den realen Abtastwerten auf der Symbolrate oder einem ganzzahligen Vielfachen davon aus. Alternativ können Symbole z.B. bereits in Verbindung mit der Abtastung des AD-Wandlers bestimmt werden. Das Ausgangssignal der Abtasteinrichtung 6 wird mittels eines insbesondere Tiefpass-Filters 7 mit einer Nyquist-Charakteristik gefiltert und einem Entzerrer (Equalizer) 8 zugeführt. Der Entzerrer 8 befreit die beiden Komponenten des Quadratursignalpaars I, Q von störenden Verzerrungen und stellt ein vorläufiges Symbol an seinem Ausgang bereit.

Nachfolgend werden aus derart bereitgestellten vorläufigen Symbolen mittels des Symbolentscheiders 10 sogenannte entschiedene Symbole D gebildet. Diese Symbole D werden dann weiteren digitalen Signalverarbeitungseinrichtungen zugeführt.

Das nach dem Entzerrer 8 bereitstehende komplexwertige Empfangssignal wird somit wie üblich einem Symbol-Entscheider 10 zugeführt, der die digitalen Daten extrahiert. Dieser Entscheider 10 ist gemäß bevorzugter Ausführungsform in die entscheidungsrückgekoppelten Regelungen (decision feedback control) von Trägerfrequenz/-phase (carrier/phase recovery), Abtastzeitpunkt (timing, clock recovery) oder Entzerrer (equalizer) eingebunden.

Das vom Entzerrer 8 ausgegebene Signal wird dazu einer Anordnung von Bauelementen (12 - 22) zum Bestimmen von Regelungsparametern zugeführt, die ganz oder teilweise auch integral ausgeführt sein können. Diese Regelungsparameter werden dann den entscheidungsrückgekoppelten Regelkreisen bzw. Komponenten im Demodulator 1 direkt oder indirekt zugeführt. Derart mit den Symbolen S bzw. den Symbolkomponenten R, Φ oder anderen daraus erzeugten Signalen, z.B. dem Abtastsignal tᵢ, versorgt werden insbesondere der Entzerrer 8, die Verstärkungsregeleinrichtung 4, die Trägerregeleinrichtung 14 und die Symbol-Abtasteinrichtung 6. Diese Regelkreise werden dabei je nach Schaltungsanordnung mit beiden Quadratursignalkomponenten I, Q des Symbols S in kartesischen Koordinaten oder in polaren Koordinaten versorgt. Möglich ist je nach Schaltungsanordnung auch die Versorgung einzelner der Bauelemente mit nur einer der Quadratursignalkomponenten, beispielsweise der Trägerregeleinrichtung 14, mit dem Winkel bzw. der Phase Φ in polaren Koordinaten und der Verstärkungsregelungseinrichtung 4 mit der Radius- bzw. Amplitudeninformation R in polaren Koordinaten.

Zur Bereitstellung der polaren Koordinaten R, Φ dient ein Koordinatenumsetzer, welcher das vorläufige Symbol oder ggfs. auch das entschiedene Symbol D zugeführt bekommt.

In Fig. 3 besteht die Anordnung zum Bestimmen der Regelungsparameter aus einer Rotationseinrichtung 9, welche als eine mögliche Form eines solchen Koordinatenumsetzers das vom Entzerrer 8 ausgegebene Signal um einen bestimmten Betrag rotiert. Dazu wird ein Rotationssteuersignal ρ' zugeführt. Das Rotationssteuersignal ρ' entspricht einem geschätzten momentanen Kippwinkel zwischen dem Empfangs-Koordinatensystem des empfangenen Signals und dem Koordinatensystem der Schaltungsanordnung, insbesondere dem des Entscheiders 10. Das Rotationssteuersignal ρ' wird dazu in einer Rotationssteuereinrichtung 12, 16 bestimmt, welcher das Ausgangssignal der Rotationseinrichtung 9 und das Ausgangssignal des zur Regelung dienenden Entscheiders 10 zugeführt werden. Der Entscheider 10 empfängt ebenfalls das Ausgangssignal der Rotationseinrichtung 9.

Das Ausgangssignal des Entscheiders 10 wird außerdem einer Gegenrotationseinrichtung 11 zum Durchführen einer entgegengesetzten Rotation zugeführt. Der Gegenrotationseinrichtung 11 wird ebenfalls das Rotationssteuersignal ρ' der Rotationssteuerungseinrichtung 12, 16 zugeführt. Das Ausgangssignal der Gegenrotationseinrichtung 11 wird einer Taktsteuereinrichtung 13 und dem Entzerrer 8 zugeführt.

Die Taktsteuereinrichtung 13 erzeugt das Abtastsignal tᵢ, welches der Symbol-Abtasteinrichtung 6 oder in der alternativen Ausführungsform dem AD-Umsetzer 2 zugeführt wird. Die Taktsteuereinrichtung 13 wird mit einem Basistakt einer Taktquelle versorgt, welcher auf der Symbolrate 1/T bzw. der Symboldauer/Symbolperiode T des verwendeten Modulationsverfahrens und des Demodulators 1 beruht. Außerdem wird der Taktsteuereinrichtung 13 das Signal des Entzerrers 8 zugeführt.

Der Trägerregeleinrichtung 14 wird eine Phasendifferenz bzw. ein Phasenoffset ΔΦ angelegt, welche in einer ersten Stufe 12 der Rotationssteuereinrichtung 12, 16 bestimmt wird. Der Phasenoffset ΔΦ wird optional als Differenz zwischen der Phase Φ der Symbole vor dem Entscheider 10 und der Phase Φ_{d} der Symbole D hinter dem Entscheider 10 bestimmt.

In einer zweiten Stufe 16 der Rotationssteuereinrichtung 12, 16 wird durch Summation oder durch ein Verfahren gemäß DE 103 47 259 ein Rotationssignal ρ aus dem Phasenoffset ΔΦ und dem Rotationssteuersignal ρ' bestimmt. Das Rotationssignal ρ wird mittels eines Verzögerungsglieds 17, z⁻¹ verzögert und als das Rotationssteuersignal ρ' bereit gestellt.

Zur Steuerung der Taktsteuereinrichtung 13 und weiterer der Komponenten des Demodulators 1 stehen diese vorzugsweise mit einer Steuereinrichtung in Verbindung. Die Steuereinrichtung bewirkt einen ordnungsgemäßen Ablauf und steuert die einzelnen Komponenten und Abläufe entsprechend Hart- oder Software gestützten Anweisungen. Vorzugsweise kann die Steuereinrichtung auch Funktionen einzelner der genannten Komponenten ganz oder teilweise in sich integriert aufweisen.

Wesentliches Element aller Ausführungsformen ist eine Wichtungswerteinrichtung 18 zur Bereitstellung der Wichtungswerte G für die vom Entscheider 10 zu entscheidenden bzw. entschiedenen Symbole D. Die Wichtungswerteinrichtung 18 kann vom Entscheider 10 ein zur Entscheidung zu verwendendes oder verwendetes Symbol D angelegt bekommen oder als integraler Bestandteil eines solchen Entscheiders ausgebildet sein. Möglich ist auch eine rein softwaretechnische Umsetzung.

Die Wichtungswerteinrichtung 18 stellt für das jeweilige Symbol D den diesem zugeordneten Wichtungswert G bzw. eine zeitliche Abfolge von solchen Wichtungswerten G bereit. Dieser Wichtungswert G wird zur direkten oder indirekten Wichtung weiterer für die Regelung relevanter Parameter verwendet, insbesondere zur Wichtung des Phasenoffsets ΔΦ und/oder des Rotationssteuersignals ρ'.

Gemäß Fig. 3 wird der Wichtungswert G einer ersten Wichtungseinrichtung 19 angelegt, welche zwischen die erste Stufe 12 der Rotationssteuereinrichtung 12, 16 einerseits und andererseits die Trägerregeleinrichtung 14 geschaltet ist. In der Wichtungseinrichtung 19 wird zur Bereitstellung von deren Ausgangssignalwerten entsprechend der Phasenoffset ΔΦ mit dem Wichtungswert G gewichtet. Die als Qualitätszahlen dienenden Wichtungswerte G werden somit gleichzeitig mit den entschiedenen Symbolen D in einem Zusatzblock zum Entscheider 10 bestimmt.

Die Qualitätszahlen können somit dazu verwendet werden, den Phasenoffset ΔΦ in der Wichtungseinrichtung 19 bzw. im Frequenzoffsetqualitätsblock so zu gewichten, dass die Frequenzregelung des lokalen Oszillators 15 auch bereits während der Akquisitionsphase des Demodulators 1, in welcher es noch viele falsche Entscheidungen gibt, funktioniert. Die Gewichtung erfolgt im einfachsten Fall durch Multiplikation des Phasenoffsets ΔΦ mit dem Wichtungswert G, bevor dieses Ergebnis im Frequenzkontrollblock tiefpassgefiltert wird.

Gemäß Fig. 4 wird der Wichtungswert G gemäß einer zweiten ebenfalls nur beispielhaften Ausführungsform einer zweiten Wichtungseinrichtung 16 angelegt, welche in der Rotationssteuereinrichtung 12, 16 integriert ist. Insbesondere ist die zweite Wichtungseinrichtung 16 durch die zweite Stufe 16 der Rotationssteuereinrichtung 12, 16 ausgebildet. In der zweiten Stufe 16 der Rotationssteuereinrichtung 12, 16 wird zur Bereitstellung des Rotationssignals ρ zusätzlich eine Wichtung mit dem Wichtungswert G durchgeführt.

Bei dieser Ausführungsform wird die Qualitätszahl bzw. der Wichtungswert G dazu verwendet, die Berechnung des geschätzten Rotationssignals ρ als einem Drehwinkel für die kommende Symbolentscheidung zu verbessern. Auch hier ist die einfachste Form der Beeinflussung die Multiplikation, wobei der statistische Mittelwert der Wichtungswerte G vorzugsweise um 1 liegen sollte. Somit erfolgt eine Beeinflussung der Berechnung des geschätzten Rotationssignals ρ durch den Wichtungswert G im Phasenoffsetfilter.

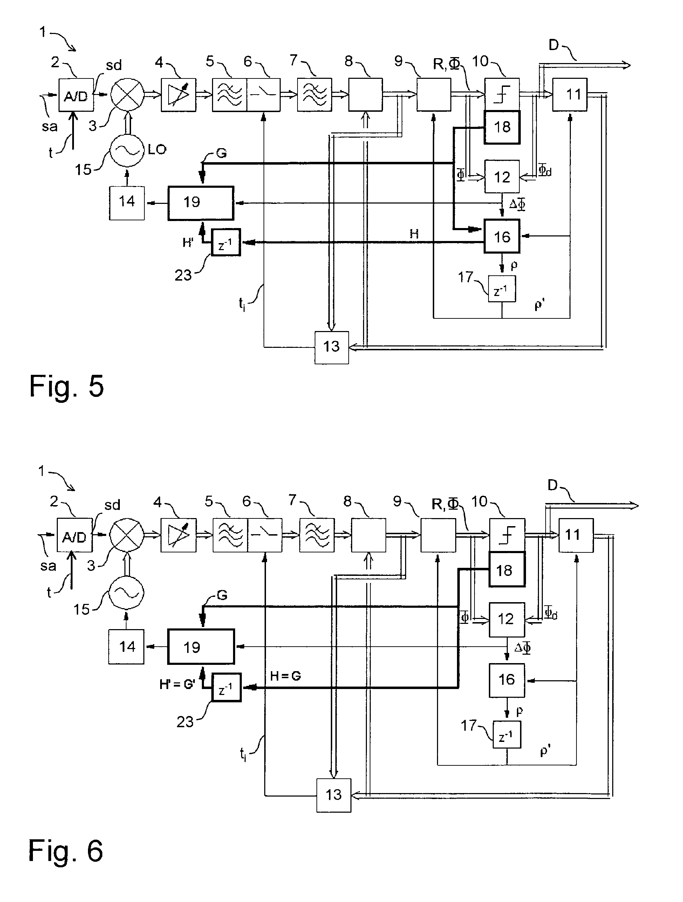

Gemäß Fig. 5 wird der Wichtungswert G gemäß einer dritten Ausführungsform einer ersten und einer zweiten Wichtungseinrichtung 19 bzw. 16 angelegt. Die erste Wichtungseinrichtung 19 ist, wie in Fig. 3, zwischen die erste Stufe 12 der Rotationssteuereinrichtung 12, 16 einerseits und andererseits die Trägerregeleinrichtung 14 geschaltet. Die zweite Wichtungseinrichtung 16 ist, wie in Fig. 4, in der Rotationssteuereinrichtung 12, 16 integriert.

Insbesondere ist die zweite Wichtungseinrichtung 16 wieder durch die zweite Stufe 16 der Rotationssteuereinrichtung 12, 16 ausgebildet. Die zweite Wichtungseinrichtung 16 stellt optional zusätzlich einen weiteren Wichtungswert H bereit, der mittels eines weiteren Verzögerungsglieds 23, z⁻¹ als verzögerter weiterer Wichtungswert H' zusätzlich der ersten Wichtungseinrichtung 19 angelegt wird. Die erste Wichtungseinrichtung 19 wichtet den Phasenoffset ΔΦ somit mit zwei Wichtungswerten G, H'.

Die Güte der Entscheidung für ein Symbol D und damit für einen Phasenoffset ΔΦ ist nicht nur von der geometrischen Position des aktuellen Signals und damit des entschiedenen Symbols D abhängig, sondern auch von der Güte des Drehwinkels bzw. Rotationssteuersignals ρ', welches das Eingangssignal in das Koordinatensystem des Entscheiders 10 gedreht hat. Daher wird gemäß dieser Ausführungsform nicht nur die Güte bzw. der Wichtungswert G des entschiedenen Symbols, sondern auch die Güte bzw. der Wichtungswert H' der aktuellen Koordinatendrehung in Form des aktuellen Rotationssteuersignals ρ' mit berücksichtigt.

Die Güte G bzw. der Wichtungswert H der Rotation wird aus der Güte der Symbolentscheidung in einer Funktion des Phasenoffsetfilters hergeleitet. Diese Funktion kann analog der Funktion sein, mit der die nächste Koordinatendrehung, z. B. als Tiefpaßfilter oder Medianfilter, berechnet wird.

Somit werden eine Symbolgüte in Form des ersten Wichtungswerts G und eine aktuelle Rotationsgüte in Form des zweiten Wichtungswerts H' im Frequenzoffsetqualitätsblock zur Gewichtung des Phasenoffsets ΔΦ verwendet.

Gemäß Fig. 6 wird der Wichtungswert G gemäß einer vierten ebenfalls nur beispielhaften Ausführungsform einer ersten Wichtungseinrichtung 19 angelegt. Die erste Wichtungseinrichtung 19 ist, wie in Fig. 3, zwischen die erste Stufe 12 der Rotationssteuereinrichtung 12, 16 einerseits und andererseits die Trägerregeleinrichtung 14 geschaltet. Außerdem wird der Wichtungswert G mittels eines weiteren Verzögerungsglieds 23, z⁻¹ als verzögerter weiterer Wichtungswert H' = G' = G(z⁻¹) zusätzlich der ersten Wichtungseinrichtung 19 angelegt. Die erste Wichtungseinrichtung 19 wichtet den Phasenoffset ΔΦ somit ähnlich, wie in Fig. 4, wieder mit zwei Wichtungswerten G, H'.

Im einfachsten Fall kann man somit als Güte bzw. zweitem Wichtungswert H der Rotation des Koordinatensystems die Phasengüte in Form des ersten Wichtungswerts G einsetzten.

Fig. 7 zeigt zwei beispielhafte Schaltungen zur Umsetzung der ersten Wichtungseinrichtung 19 in einem Frequenzoffsetqualitätsblock. Die beiden Informationen, Symbolgüte als der erste Wichtungswert G und aktuelle Rotationsgüte als der zweite Wichtungswert H', werden im Frequenzqualitätsblock zur Wichtung des Phasenoffsets ΔΦ verwendet. Eine einfache Anordnung besteht darin, dass der Phasenoffset ΔΦ mittels zweier Multiplizierer 20, 21 mit beiden Güten bzw. Wichtungswerten G, H' multipliziert wird. Gemäß der anderen Anordnung werden die beiden Güten bzw. Wichtungswerten G, H' in einem Addierer 22 addiert. Anschließend wird der Phasenoffset ΔΦ in einem Multiplizierer 20 mit der Summe aus dem Addierer 22 multipliziert. Andere mathematische Operationen können eingesetzt werden.

Weiterhin ist es möglich, eine ein- oder zweidimensionale Tabelle zu verwenden, die in einem Speicher hinterlegt ist und deren Adressierung durch die beiden Güten bzw. Wichtungswerte G, H' erfolgt, wobei deren Einträge bestimmen, wie mit dem Phasenoffset ΔΦ zu verfahren ist.

Die Qualitäts-Tabelle kann als Speicher Element der Wichtungswerteinrichtung 18 sein oder mit dieser verbunden sein. Die Qualitäts-Tabelle wird für jedes verwendete Symbolalphabet, z. B. 256-QAM, 64-QAM, zu definieren.

Die Qualitätszahlen bzw. Wichtungswerte G, H' brauchen keine Konstanten sein, sondern die Qualitäts-Tabelle kann vorzugsweise dem Fortschritt der Synchronisation angepasst werden.

Insbesondere können nach einem Einrasten der Regelungen neutrale Elemente, insbesondere als Faktor eine "1", in eine solche Tabelle geschrieben werden, um so die Schaltung zu neutralisieren. Symbole D oder Radien r, die bei der Regelung nicht berücksichtigt werden sollen, haben als Qualitätszahl eine "0", wie dies z.B. auch aus Fig. 1 und 2 ersichtlich ist.

Fig. 8 zeigt in der oberen Kurve den gemessenen und akkumulierten absoluten Phasenfehler und in der unteren Kurve den Akkumulator der Frequenzregelung. Zum Zeitpunkt A wird ein Frequenzoffset von z.B. 0,1·f_{symbol} mit f_{symbol} als Symbolfrequenz eingeschaltet.

## Patentansprüche

1. Vorrichtung zum Entscheiden eines Symbols (D) beim Empfang eines mit einem Quadratursignalpaar (I, Q) gekoppelten Signals mit
- einem Entscheider (10) zum Entscheiden des Symbols (D) durch Analyse eines Empfangssignals (sa, sd) im komplexen Koordinatenraum (I, Q) und
- einer Regelungsschleife zur QAM-Frequenzregelung und/oder Rotationsregelung unter Verwendung von Regelungsparametern (ΔΦ, ρ'), die ausgebildet und/oder gesteuert ist abhängig von zumindest einem vom Entscheider (10) entschiedenen Symbol (D) die Regelungsparameter (ΔΦ, ρ') für spätere Entscheidungen anzupassen,
**dadurch gekennzeichnet, dass**
- eine Wichtungswerteinrichtung (18) ausgebildet und/oder gesteuert ist, für die vom Entscheider (10) zu entscheidenden und/oder entschiedenen Symbole (D) jeweils einen Wichtungswert (G) einer Vielzahl von Wichtungswerten (G) abhängig von der Symbolpositon im komplexen Koordinatenraum (I, Q) für die Regelungsschleife bereitzustellen.

2. Vorrichtung nach Anspruch 1, bei der die Wichtungswerteinrichtung (18) ausgebildet und/oder gesteuert ist, aus einem Phasenoffset (ΔΦ) und/oder einem Rotationssteuersignal (p') den Wichtungswert (G) bereitzustellen.

3. Vorrichtung nach Anspruch 1 oder 2, bei der eine Wichtungseinrichtung (19) ausgebildet und/oder gesteuert ist, mit dem Wichtungswert (G) einen Regelwert für eine Trägerregeleinrichtung (14), insbesondere den Phasenoffset (ΔΦ), mit dem Wichtungswert (G) zu wichten.

4. Vorrichtung nach einem vorstehenden Anspruch, bei der eine Wichtungseinrichtung (16) als Bestandteil einer Rotationssteuereinrichtung (12, 16) ausgebildet und/oder gesteuert ist, mit dem Wichtungswert (G) einen Phasenoffset (ΔΦ) zu wichten.

5. Vorrichtung nach Anspruch 3 und 4, bei der die Wichtungseinrichtung (16) zum Erzeugen des Rotationssignals (ρ) als eine zweite Wichtungseinrichtung (16) einen zusätzlichen Wichtungswert (H) bereitstellt, mit dem als verzögerter weiterer Wichtungswert (H') der Regelwert, insbesondere ein Phasenoffset (ΔΦ), für die Trägerregeleinrichtung (14) zusätzlich gewichtet wird.

6. Vorrichtung nach einem vorstehenden Anspruch, bei der die weitere Wichtungswerteinrichtung (16) als Bestandteil eines Phasenoffsetfilters ausgebildet ist.

7. Vorrichtung nach einem vorstehenden Anspruch, bei der die Wichtungswerteinrichtung (18) ausgebildet und/oder gesteuert ist, jedem Symbol (D) jeweils den Wichtungswert (G) der Vielzahl von Wichtungswerten (G) abhängig von seinem Radius (ri) des Symbols (D) im komplexen Koordinatenraum (I, Q) zuzuordnen.

8. Vorrichtung nach einem vorstehenden Anspruch, bei der die Wichtungswerteinrichtung (18) ausgebildet und/oder gesteuert ist, jedem Symbol (D) jeweils den Wichtungswert (G) der Vielzahl von Wichtungswerten (G) abhängig von der Position des Symbols (D) im komplexen Koordinatenraum (I, Q) individuell zuzuordnen.

9. Vorrichtung nach einem vorstehenden Anspruch, bei der mittels einer in einem Speicherabschnitt hinterlegten Tabelle, insbesondere variablen Tabelle solche Wichtungswerte bereitstellbar sind.

10. Vorrichtung nach Anspruch 9, bei der die Wichtungswerte aus der Tabelle als einer zwei- oder mehrdimensionalen Tabelle bereitstellbar sind.

11. Verfahren zum Entscheiden eines Symbols (D) beim Empfang eines mit einem Quadratursignalpaar (I, Q) gekoppelten Signals zur QAM-Frequenzregelung und/oder Rotationsregelung bei dem
- mit einem Entscheider (10) eine Entscheidung eines Symbols (D) unter Verwendung von Regelungsparametern (ΔΦ, ρ') im komplexen Koordinatenraum (I, Q) getroffen wird und
- abhängig von zumindest einem entschiedenen Symbol (D) die Regelungsparameter (ΔΦ, ρ') für spätere Entscheidungen angepasst werden,
**dadurch gekennzeichnet, dass**
- für die vom Entscheider (10) zu entscheidenden und/oder entschiedenen Symbole (D) jeweils ein Wichtungswert (G) einer Vielzahl von Wichtungswerten (G) abhängig von der Symbolpositon im komplexen Koordinatenraum (I, Q) für die Regelungsschleife bereitgestellt wird.

12. Verfahren nach Anspruch 11, bei dem mit dem zumindest einen Wichtungswert (G) ein Phasenoffset (ΔΦ) und/oder ein Rotationssteuersignal (p') gewichtet wird.

13. Verfahren nach Anspruch 11 oder 12, bei dem die Vielzahl der Wichtungswerte (G) in einer Tabelle bereitgestellt wird, die für jedes verschiedene Symbolalphabete verschiedene Vielzahlen der Wichtungswerte (G) bereitstellt.

14. Verfahren nach einem der Ansprüche 11 bis 13, bei dem die Wichtungswerte (G) in einer Tabelle bereitgestellt werden, wobei die Wichtungswerte (G) einem Synchronisationsfortschritt der Frequenzregelung angepasst werden.

15. Verfahren nach einem der Ansprüche 11 bis 14, bei dem ein Phasenoffset und/oder eine Rotationswert mit zwei oder mehr Wichtungswerten (G, H') gewichtet werden.
